# EUROPEAN PATENT APPLICATION

(11) **EP 2 669 710 A2**
(43) Date of publication of application: **04.12.2013**
(21) Application number: 13169732.8
(22) Date of filing: 29.05.2013
(51) Int. Cl.: G01T 1/20

(54) **Phosphor sheet and auxiliary transport member**

(30) Priority: 31.05.2012 JP 2012125427
(71) Applicant: Fujifilm Corporation, Minato-ku Tokyo (JP)
(72) Inventor: Ogura, Nobuhiko, Kanagaw (JP)
(74) Representative: Klunker . Schmitt-Nilson . Hirsch

(57) **Abstract**

A phosphor sheet includes a flexible substrate; a phosphor layer formed on a front face of the substrate, and plural magnets provided on a back face of the substrate.

## Description

### BACKGROUND OF THE INVENTION

### Technical Field

The present invention relates to a phosphor sheet that records radiographic image data, and to an auxiliary transport member used for conveying a phosphor sheet.

### Related Art

A radiographic image data reading apparatus is already known that reads radiographic image data recorded on a stimulable phosphor sheet (see, for example, Japanese Patent Application Laid-Open (JP-A) No. 2004-163539).

Stimulable phosphor sheets used in radiographic image data reading apparatuses are also disclosed in JP-A Nos. 11-352299, 2009-510491, 2002-182322, 10-3000, and US Patent 7,781,746 B1.

In radiographic image data reading apparatuses, a stimulable phosphor sheet needs to be attached to an auxiliary transport member to be transported in order to read radiographic image data from a stimulable phosphor sheet that is either of smaller size than a predetermined size or is of a special shape. Both a stimulable phosphor sheet and an auxiliary transport member need to be flexible in order to convey the auxiliary transport member affixed with the stimulable phosphor sheet along a curved conveying path. However, the stimulable phosphor sheets disclosed in JP-ANos. 2004-163539, 2009-510491 and 10-3000 do not envisage being conveyed along a curved conveying path.

In the configuration disclosed in JP-A No. 2002-182322, a small sized stimulable phosphor sheet is provided with a special engaging portion that projects out from the stimulable phosphor sheet, and an engaged portion that engages with the special engaging portion is also provided to an auxiliary transport member. Accordingly, the configuration of the small sized stimulable phosphor sheet and the auxiliary transport member is complicated, and effort is required to engage the engaging portion of the stimulable phosphor sheet with the engaged portion of the auxiliary transport member.

In the configuration of US Patent No. 7,781,746 B1, holding force is reduced in cases in which dust or dirt adheres to a holding member during use or due to deterioration of the holding member. Therefore, there is a concern that a portion of the stimulable phosphor sheet might lift up from the auxiliary transport member or the stimulable phosphor sheet might peel off and detach from the auxiliary transport member.

### SUMMARY

In consideration of the above circumstances, the present invention provides a phosphor sheet and an auxiliary transport member that have a simple configuration, and that are capable of being reliably conveyed in a radiographic image data reading apparatus having a curved conveying path.

A phosphor sheet of a first aspect of the present invention includes a flexible substrate, a phosphor layer formed on a front face of the substrate, and a plurality of magnets provided on a back face of the substrate.

A second aspect of the present invention is a phosphor sheet of the first aspect wherein the plurality of magnets are flexible magnet sheets.

A third aspect of the present invention is the phosphor sheet of the first aspect or the second aspect wherein the plurality of magnets are disposed along a first direction, and spaces that extend in a direction orthogonal to the first direction are provided between the magnets that are adjacent to each other in the first direction.

A fourth aspect of the present invention is the phosphor sheet of the third aspect further comprising a plurality of magnet rows that are arrayed in a direction intersecting with the first direction, each of the plurality of magnets rows comprising a plurality of the magnets arrayed along the first direction.

A fifth aspect of the present invention is the phosphor sheet of the first aspect or the second aspect wherein the plurality of magnets are disposed without spaces between adjacent magnets.

A phosphor sheet of a sixth aspect of the present invention includes a flexible substrate, a phosphor layer formed on a front face of the substrate, a flexible magnet sheet provided on a back face of the substrate, and a plurality of first grooves that are disposed traversing across the magnet sheet and are parallel to each other.

A seventh aspect of the present invention is the phosphor sheet of the sixth aspect wherein the magnet sheet includes a plurality of second grooves extending along a direction intersecting with the first grooves.

A auxiliary transport member of an eighth aspect of the present invention comprising a flexible support plate that retains the phosphor sheet of any one of the first aspect to the seventh aspect, and a frame member that is provided so as to run along an edge portion of the support plate on at least one face of the support plate and is formed from a material softer than the support plate.

A ninth aspect of the present invention is the auxiliary transport member of the eighth aspect wherein the support plate is a stainless steel plate.

A tenth aspect of the present invention is the auxiliary transport member of the eighth aspect or the ninth aspect wherein the frame member is formed thicker than the phosphor sheet.

A auxiliary transport member of an eleventh aspect of the present invention includes a flexible support plate that retains the phosphor sheet of any one of the first aspect to the seventh aspect, and sheet members that are configured from a material softer than the support plate and that sandwich the support plate.

### BRIEF DESCRIPTION OF THE DRAWINGS

Exemplary embodiments of the present invention will be described in detail based on the following figures, wherein:
Fig. 1 is a vertical cross-section as seen from the side of a radiographic image data reading apparatus that conveys an auxiliary transport member retaining a stimulable phosphor sheet thereon and reads radiographic image data recorded on the stimulable phosphor sheet;
Fig. 2A is a bottom view of a stimulable phosphor sheet according to a first exemplary embodiment used in the radiographic image data reading apparatus illustrated in Fig. 1, Fig. 2B is a side view of the stimulable phosphor sheet as viewed along the length direction, and
Fig. 2C is an enlarged cross-section of the stimulable phosphor sheet (a cross-section taken on line 2C-2C of Fig. 2A);
Fig. 3A is a plan view of an auxiliary transport member affixed with a stimulable phosphor sheet according to the first exemplary embodiment used in the radiographic image data reading apparatus illustrated in Fig. 1, and Fig. 3B is a cross-section of the auxiliary transport member affixed with the stimulable phosphor sheet (a cross-section taken on line 3B-3B of Fig. 3A);
Fig. 4A is a front view of a first roller pair of the radiographic image data reading apparatus illustrated in Fig. 1 and a cross-section of an auxiliary transport member that is conveyed by the first roller pair, and Fig. 4B is a side view of an auxiliary transport member and a stimulable phosphor sheet being conveyed along a curved conveying path;
Fig. 5 is a bottom view of a stimulable phosphor sheet according to a second exemplary embodiment;
Fig. 6 is a bottom view of a stimulable phosphor sheet according to a third exemplary embodiment;
Fig. 7 is a bottom view of a stimulable phosphor sheet according to a fourth exemplary embodiment;
Fig. 8 is a bottom view of a stimulable phosphor sheet according to a fifth exemplary embodiment;
Fig. 9A is a plan view of an auxiliary transport member that retains stimulable phosphor sheets according to a sixth exemplary embodiment to a ninth exemplary embodiment, and Fig. 9B is a cross-section of the auxiliary transport member illustrated in Fig. 9A, taken on line 9B-9B;
Fig. 10 is a perspective view of a stimulable phosphor sheet according to a tenth exemplary embodiment;
Fig. 11A and Fig. 11B are enlarged cross-sections of magnet sheets illustrating modified examples of a first groove or a second groove formed in the magnet sheet illustrated in Fig. 10;
Fig. 12 is a plan view of a magnet sheet of a stimulable phosphor sheet according to an eleventh exemplary embodiment;
Fig. 13 is a cross-section of a support plate of an auxiliary transport member according to a twelfth exemplary embodiment;
Fig. 14 is bottom view of a stimulable phosphor sheet according to a thirteenth exemplary embodiment;
Fig. 15 is cross-section of a stimulable phosphor sheet according to the thirteenth exemplary embodiment (a cross-section taken on line 15-15 of Fig. 14);
Fig. 16 is bottom view of a stimulable phosphor sheet according to a fourteenth exemplary embodiment;
Fig. 17 is a cross-section of a stimulable phosphor sheet; and
Fig. 18A is a cross-section of a stimulable phosphor sheet illustrating a manner in which secondary radiation (scatter radiation) x is generated; and Fig. 18B is an enlarged view illustrating a portion of an image projected onto a monitor of a radiographic image data reading apparatus.

### DETAILED DESCRIPTION

### First Exemplary Embodiment

Explanation follows regarding a stimulable phosphor sheet IP and an auxiliary transport member 16 according to a first exemplary embodiment of the present invention.

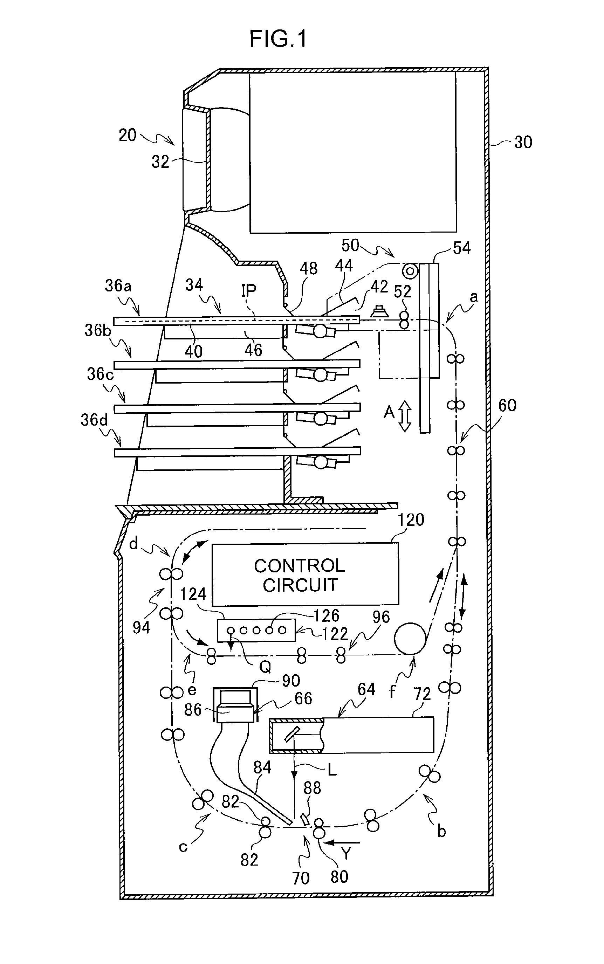

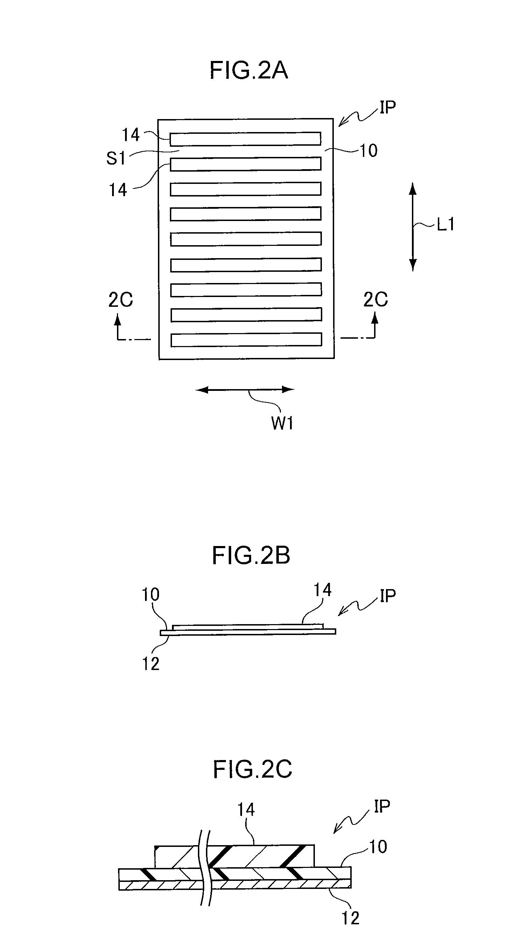

Fig. 1 is vertical cross-section illustrating a schematic configuration of a radiographic image data reading apparatus 20 that reads radiographic image data recorded on the stimulable phosphor sheet IP. Fig. 2A is a bottom view of the rectangular shaped stimulable phosphor sheet IP of the present exemplary embodiment. Fig. 2B is a side view of the stimulable phosphor sheet IP, as viewed from the length direction side (along the arrow L1 direction in Fig. 2A), and Fig. 2C is an enlarged cross-section of the stimulable phosphor sheet IP.

### Stimulable Phosphor Sheet

As illustrated in Fig. 2A to Fig. 2C, the stimulable phosphor sheet IP includes a substrate 10 that is made for example from a flexible synthetic resin. A stimulable phosphor layer 12 is attached to the whole of one face of the substrate 10. Plural magnet sheets 14 that are permanent magnets formed in strip shapes are fixed by, for example, adhesive to the other face of the substrate 10.

Note that in the following, the side of the stimulable phosphor sheet IP provided with the stimulable phosphor layer 12 is referred to as the front face, and the side provided with the magnet sheets 14 is referred to as the back face.

For each of the magnet sheets 14 a common flexible sheet is employed with magnetic particles dispersed for example in rubber or a synthetic resin.

The magnet sheets 14 of the present exemplary embodiment are commonly used, single-face, multi-pole type magnet sheets (having a structure of N-poles and S-poles disposed on a single face), and a side of the magnet sheet 14 that is opposite to the substrate 10 is configured as the retaining face on which the N-poles and the S-poles are disposed.

As illustrated in Fig. 2A, the substrate 10 of the present invention is formed in a rectangular shape. The back face of the substrate 10 is affixed with plural magnet sheets 14 that are strip shaped with uniform width The length directions of the plural magnet sheets 14 are oriented along a direction orthogonal to the length direction of the substrate 10 (to the arrow L1 direction of Fig. 2A), namely along the width direction of the substrate 10 (the arrow W1 direction), and are fixed along the length direction of the substrate 10. Spaces S1 that extend in a straight line shape along the substrate 10 width direction are each formed between one magnet sheet 14 and another magnet sheet 14.

In the stimulable phosphor sheet IP of the present exemplary embodiment, due to the spaces S1 that extend in a straight line shape along the substrate 10 width direction, being formed between one magnet sheet 14 and another magnet sheet 14, the stimulable phosphor sheet IP of the present exemplary embodiment has a lower bending rigidity in the stimulable phosphor sheet IP length direction at portions not affixed with the magnet sheets 14, namely between one magnet sheet 14 and another magnet sheet 14, than at portions where the magnet sheets 14 are fixed.

The overall bending rigidity is high and bending is difficult if a single magnet sheet 14 is attached to the whole back face of the substrate 10. However in the stimulable phosphor sheet IP of the present exemplary embodiment, due to the lower bending rigidity between one magnet sheet 14 and another magnet sheet 14 as described above, a configuration is achieved in which bending in the stimulable phosphor sheet length direction is easier than in cases in which a single magnet sheet 14 is attached to the whole back face of the substrate 10.

As described later, the stimulable phosphor sheet IP is used in a state in which the array direction of the magnet sheet 14, namely the stimulable phosphor sheet IP length direction (the arrow L1 direction), is oriented along the conveying direction in the radiographic image data reading apparatus 20.

### Configuration of Auxiliary Transport Member

The stimulable phosphor sheet IP in the present exemplary embodiment is retained on the auxiliary transport member 16, described below, and conveyed inside the radiographic image data reading apparatus 20.

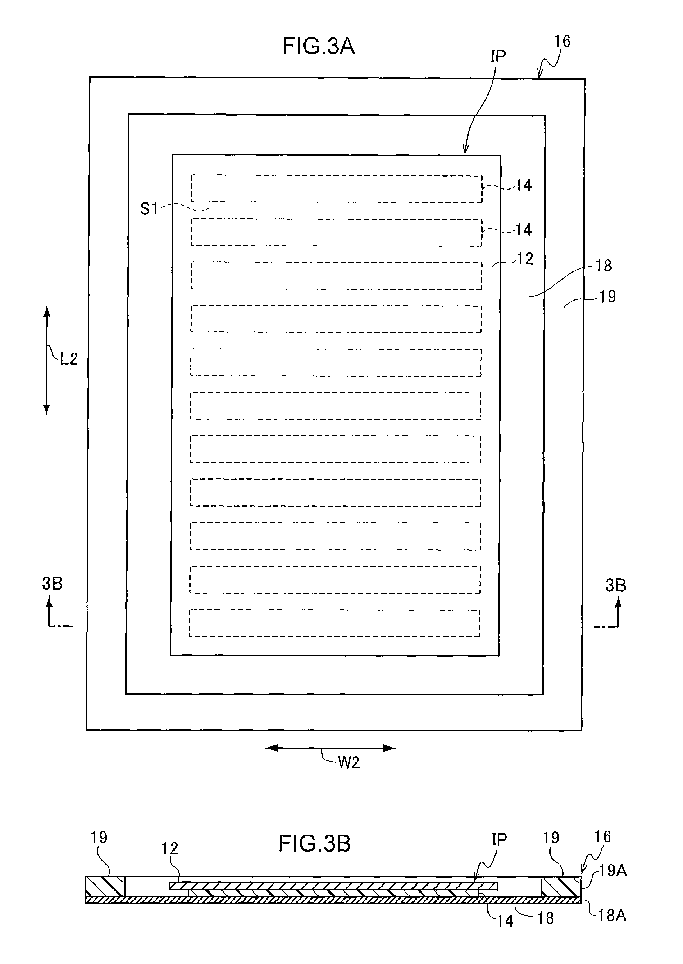

As illustrated in Fig. 3A and Fig. 3B, the auxiliary transport member 16 includes a thin and flexible support plate 18 that is formed in a rectangular shape from a magnetic member that retains the magnet sheets 14 of the stimulable phosphor sheet IP. The support plate 18 may, for example, be formed from a magnetic member such as a stainless steel plate or iron plate. In the present exemplary embodiment a 0.1mm thick stainless steel plate is used as the support plate 18; however, an iron plate that has been treated for example by plating may be employed for the support plate 18. Moreover, the thickness of the support plate 18 is not limited to 0.1mm.

A frame member 19 made from a flexible plate member is disposed on one face of the support plate 18 so as to run along the outer perimeter of the support plate 18.
In the present exemplary embodiment the frame member 19 is formed from a synthetic resin sheet. The frame member 19 is fixed to one face of the support plate 18 using for example adhesive so that outer peripheral edge portions 19A are in the same plane as outer peripheral edge portions 18A of the support plate 18. Note that in the following, for the auxiliary transport member 16, the face of the support plate 18 that is affixed with the frame member 19 is referred to as the front face.

By thus affixing the frame member 19 to the front face side of the support plate 18, the front face outer peripheral portions of the front face side of the support plate 18 are covered by the frame member 19, as illustrated in Fig. 3B. The outer peripheral portions of the frame member 19 may be configured to project out further to the outside than the outer peripheral portions of the support plate 18.

In the present exemplary embodiment, the length direction of the auxiliary transport member 16 (arrow L2 direction) is determined as the conveying direction in the radiographic image data reading apparatus 20.

Overall Configuration of the Radiographic Image Data Reading Apparatus As illustrated in Fig. 1, a touch panel 32 that includes the functions of an operating section and a monitor is provided in an upper portion of a case 30 that configures the external profile of the radiographic image data reading apparatus 20. Cassette loading sections 36a to 36d in which plural, for example four, individual cassettes 34 are detachable are provided below the touch panel 32.

The cassettes 34 include rectangular shaped cases 40 that house the stimulable phosphor sheets IP, and lids 44 that open and close opening sections 42 of the cases 40 freely.

A support table 46 is provided to each of the cassette loading sections 36a to 36d for mounting the cassettes 34, and a freely openable and closable shutter member 48 is disposed at each of the cassette loading sections 36a to 36d to shield the inside of the case 30 from light. A cassette position fixing mechanism (not shown in the drawings) that fixes the position of the cassettes 34, and a lid opening and closing mechanism (not shown in the drawings) that opens and closes the lids 44 of the cassettes 34, are incorporated into the cassette loading sections 36a to 36d.

Inside the cassette loading sections 36a to 36d there is also a raising and lowering sheet feeder section 50 that is disposed so as to correspond to any one of the cassette loading section 36a to 36d, that takes out the stimulable phosphor sheet IP from any cassette 34, and returns the stimulable phosphor sheet IP inside the cassette 34 after reading and erasing. The raising and lowering sheet feeder section 50 includes a sheet-feeder mechanism 52 containing rollers for conveying the stimulable phosphor sheets IP one sheet at a time, and a raising and lowering mechanism 54 that raises and lowers the sheet-feeder mechanism 52 in the up-down direction (the arrow A direction).

A main conveying path 60 to convey the auxiliary transport member 16 retaining the stimulable phosphor sheet IP is provided contiguously to the sheet-feeder mechanism 52 configuring the raising and lowering sheet feeder section 50. The main conveying path 60 extends downwards from the raising and lowering sheet feeder section 50, and then curves at a lower portion of the case 30, so as to arrive at a read conveying path 70 extending in a horizontal direction. First and second roller pairs 80, 82 configuring the read conveying path 70 nip portions of the auxiliary transport member 16 where the frame member 19 is provided so as to perform sub-scan conveying in an arrow Y direction. In the present exemplary embodiment, rollers with an outer peripheral face made of rubber are used as the first and second roller pairs 80, 82.

The read conveying path 70 curves and extends upwards, and is then contiguous to a refuge conveying path 94 that extends along a horizontal direction. Further, one end of an erasure conveying path 96 is contiguous to a location between the read conveying path 70 and the refuge conveying path 94. The other end of the erasure conveying path 96 is contiguous to the main conveying path 60, and the erasure conveying path 96 supplies the auxiliary transport member 16 that retains the stimulable phosphor sheet IP and has been conveyed out from the refuge conveying path 94 to the main conveying path 60.

An excitation light scanning unit 64 and an upper reading unit 66 are disposed at an upper portion at the inner peripheral side of the upwards curving read conveying path 70.

The excitation light scanning unit 64 includes a scanning light optical system 72 that uses for example a polygonal mirror to deflect excitation light L output from a laser light source, not shown in the drawings, in a direction orthogonal to the arrow Y direction, guides the excitation light L to the stimulable phosphor sheet IP, and performs scanning. Optically stimulated luminescent light containing radiographic image data is output from the stimulable phosphor sheet IP being illuminated by the excitation light L.

The upper reading unit 66 includes: a light converging guide 84 that is formed from a transparent material such as an acrylic plate with an incident face at a lower end portion disposed in the vicinity of a location between the first and second roller pairs 80, 82; and a photoelectric converter 86 that is formed for example from a photomultiplier and is connected to an emitting face at an upper end portion of the light converging guide 84.

A light converging mirror 88 is also disposed in the vicinity of the incident face of the light converging guide 84 in order to guide the optically stimulated luminescent light R efficiently to the incident face. The photoelectric converter 86 converts the optically stimulated luminescent light input through the light converging guide 84 into an electrical signal.

Note that in the present exemplary embodiment, as illustrated in Fig. 1, portions of the photoelectric converter 86 other than light incident portions (a photoelectric face) are covered by a magnetic shield member 90. A material with high magnetic permeability may for example be applied as the magnetic shield member 90, such as a permalloy, a grain-oriented silicon steel plate, or an iron plate (pure iron); however, other materials may be applied. Note that a permalloy is most appropriately applied as the magnetic shield member 90.

Such a configuration is adopted so that the photoelectric converter 86 is not affected by the magnetic flux lines of the magnet sheet 14 of the stimulable phosphor sheet IP when the auxiliary transport member 16 retaining the stimulable phosphor sheet IP is moved on the conveying path.

Between the refuge conveying path 94 and the erasure conveying path 96 there are disposed: a control circuit 120 that performs overall control of the radiographic image data reading apparatus 20; and an erasing unit 122 that erases residual radiation energy present in stimulable phosphor sheets IP whose radiographic image data has been read. The erasing unit 122 is configured by housing plural erasing light sources 126 formed for example from cold cathode fluorescent tubes inside a case 124.

### Operation

Explanation follows regarding an operation method of the stimulable phosphor sheet IP and the auxiliary transport member 16 of the present exemplary embodiment.

Firstly, as illustrated in Fig. 3, the stimulable phosphor sheet IP that has accumulated and recorded radiographic image data is attached to the front face of the support plate 18 at a position inside the frame member 19 of the auxiliary transport member 16.

At this time, the magnet sheets 14 are retained facing towards the front face of the support plate 18 such that the magnet sheets 14 of the stimulable phosphor sheet IP are retained by the support plate 18 of the auxiliary transport member 16. In the present exemplary embodiment the orientation when retaining the stimulable phosphor sheet IP on the support plate 18 is important.

In the present exemplary embodiment, the array direction of the magnet sheets 14 in the stimulable phosphor sheet IP (the arrow L1 direction) is oriented in the conveying direction in the radiographic image data reading apparatus 20, and the length direction of the auxiliary transport member 16 (the arrow L2 direction) is oriented along the conveying direction in the radiographic image data reading apparatus 20.

Accordingly, as illustrated in Fig. 3A, the stimulable phosphor sheet IP is retained by the support plate 18 of the auxiliary transport member 16 such that the array direction of the magnet sheet 14 (arrow L1 direction) is along the length direction of the auxiliary transport member 16 (the arrow L2 direction).

The auxiliary transport member 16 is then housed in the cassette 34 with the stimulable phosphor sheet IP facing towards the lower side, and this cassette 34 is loaded into one of the cassette loading sections 36a to 36d (see Fig. 1).

After the cassette 34 loaded into one of the cassette loading sections 36a to 36d has had its position fixed by a mechanism for fixing the position of the cassettes 34, the lid 44 of the cassette 34 is opened, and the stimulable phosphor sheet IP is fed out from the cassette 34 by the raising and lowering the sheet feeder section 50. The fed stimulable phosphor sheet IP is conveyed along the main conveying path 60 and supplied onto the read conveying path 70.

The read conveying path 70 nips the stimulable phosphor sheet IP with the first and second roller pairs 80, 82 and performs sub-scan conveying in the arrow Y direction. The auxiliary transport member 16 is conveyed on the read conveying path 70 with the stimulable phosphor sheet IP facing towards the upper side.

Moreover, the excitation light scanning unit 64 disposed at an upper portion of the read conveying path 70 uses, for example, a polygon mirror to deflect excitation light L output from a laser light source, not shown in the drawings, in a main-scanning direction (a direction orthogonal to the sub-scanning direction, that is, a direction perpendicular to the plane of the page of Fig. 1), so as to scan the stimulable phosphor layer 12 of the stimulable phosphor sheet IP. The stimulable phosphor layer 12 of the stimulable phosphor sheet IP that is illuminated by the excitation light L outputs optically stimulated luminescent light containing radiographic image data.

The optically stimulated luminescent light output from the stimulable phosphor layer 12 of the stimulable phosphor sheet IP is directly incident to the incident face of the light converging guide 84 configuring the upper reading unit 66, or is incident to the incident face after being reflected by the light converging mirror 88, and is then guided from the emitting face to the photoelectric converter 86 where it is converted into an electrical signal.

The electrical signal of the radiographic image data obtained by the photoelectric converter 86 is transmitted through the control circuit 120 and a network to an external image data processing apparatus.

The stimulable phosphor sheet IP that has completed reading is then temporarily conveyed from the read conveying path 70 onto the refuge conveying path 94, and then supplied into the erasure conveying path 96. Note that in the interval in which the stimulable phosphor sheet IP that has completed reading is temporarily conveyed to the refuge conveying path 94, another stimulable phosphor sheets IP may be supplied to the read conveying path 70 and read processing may be performed in parallel.

For the stimulable phosphor sheet IP supplied to the erasure conveying path 96, the erasing light source 126 configuring the erasing unit 122 irradiates erasing light Q onto the stimulable phosphor layer 12, and the residual radiographic image data in the stimulable phosphor layer 12 is erased. After erasure, the stimulable phosphor sheet IP is conveyed through the main conveying path 60 to the raising and lowering sheet feeder section 50, and then returned to the desired cassette 34.

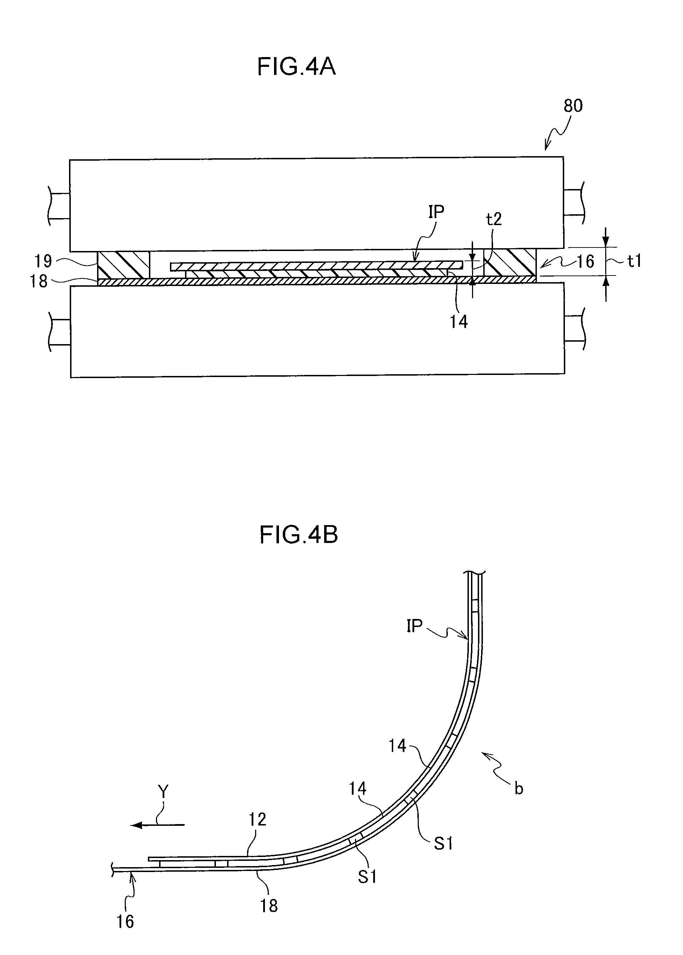

In the radiographic image data reading apparatus 20, as illustrated in Fig. 4A, members that convey the auxiliary transport member 16, for example the first roller pair 80, contact the frame member 19 of the auxiliary transport member 16 and the back face of the support plate 18, so as to nip and convey the auxiliary transport member 16.

As illustrated in Fig. 4A, a thickness t1 of the frame member 19 is set thicker than a thickness t2 of the stimulable phosphor sheet IP and, therefore, contact between the stimulable phosphor sheet IP and the first roller pair 80 can be avoided.

As illustrated in Fig. 1, in the radiographic image data reading apparatus 20 according to the present exemplary embodiment, the conveying path of the auxiliary transport member 16 is not wholly straight line shaped, and is curved locally. Consequently, the radiographic image data reading apparatus 20 can be made more compact than cases in which the whole conveying path is a straight line shape.

In the radiographic image data reading apparatus 20 of the present exemplary embodiment, there are portions of the conveying path of the auxiliary transport member 16 that are curved (the portions indicated by the arrows a to d in Fig. 1). However, due to the flexible nature of the stimulable phosphor sheet IP and the auxiliary transport member 16, the auxiliary transport member 16 affixed with the stimulable phosphor sheet IP can be conveyed along the curved conveying path, as illustrated in Fig. 4B.

Moreover, in the stimulable phosphor sheet IP of the present exemplary embodiment, the plural flexible magnet sheets 14 are disposed separated from each other at intervals along the conveying path, thereby enabling the stimulable phosphor sheet IP to readily follow the curved conveying path by deforming into a curve due to the locations between one magnet sheet 14 and another magnet sheet 14 particularly easily bend.

As a result, the stimulable phosphor sheet IP retained by the auxiliary transport member 16 is prevented from lifting away or being peeled off from the auxiliary transport member 16 during conveying along the curved conveying path, thereby enabling reliable conveying even though the conveying path is curved with a small radius of curvature.

Note that it is preferable to set the width of the magnet sheet 14 in the conveying direction and the pitch of the magnet sheet 14 such that the plural magnet sheets 14 are arrayed along the conveying direction (the arrow Y direction) with separations between each other corresponding to the curved conveying path when the auxiliary transport member 16 is conveyed along a curved conveying path, as illustrated in Fig. 4B.

Thus according to the stimulable phosphor sheet IP and the auxiliary transport member 16 of the present exemplary embodiment, the stimulable phosphor sheet IP can be reliably retained on the auxiliary transport member 16 by the magnet sheets 14 in the interval from image reading through to completion of image erasure. Further, since the stimulable phosphor sheet IP is retained on the auxiliary transport member 16 by the magnet sheets 14, after completing image erasure, the stimulable phosphor sheet IP can be easily removed from the auxiliary transport member 16.

Even when the stimulable phosphor sheet IP in the present exemplary embodiment is conveyed along a curved conveying path it curves following the curved conveying path and, therefore, lifting up of the stimulable phosphor sheet IP from the auxiliary transport member 16 is prevented. Hence, while not shown in the drawings, even if the read conveying path 70 is curved in the vicinity of a lower end portion of the light converging guide 84, a certain separation can still be maintained between the stimulable phosphor sheet IP and the incident face of the lower end portion of the light converging guide 84. Consequently, the upper reading unit 66 is able to read radiographic image data from the stimulable phosphor sheet IP at high precision, thereby enabling high quality images to be obtained.

According to the present exemplary embodiment, due to using the flexible auxiliary transport member 16 and the stimulable phosphor sheet IP configured so as to bend readily along the conveying direction, the radius of curvature of the conveying path of the radiographic image data reading apparatus 20 can be made smaller, and the radiographic image data reading apparatus 20 can be made even more compact.

In the stimulable phosphor sheet IP of the present exemplary embodiment, since the permanent magnets as the magnet sheets 14 are used as members for retaining to the auxiliary transport member 16, there is no change over time in the retention force compared to cases in which for example a suction or adhesive sheet is used adhesion or suction. With a suction or adhesive sheet, the adhesion force readily falls for example due to dust and dirt adhesion, or due to deterioration with time such that it can no longer be used. However, with the stimulable phosphor sheet IP of the present exemplary embodiment, since the permanent magnets as the magnet sheets 14 are used, it does not become unusable as in a suction or adhesive sheet.

Note that the magnet sheets 14 of the present exemplary embodiment are single-face multi-pole types, and the face on the opposite side to the substrate 10 is configured as the retaining face. Since there are no magnetic poles on the stimulable phosphor layer side of the magnet sheets 14, a configuration is achieved in which magnetic dust, such as iron filings, does not readily adhere to the front face of the stimulable phosphor layer 12.

In the auxiliary transport member 16 of the present exemplary embodiment, the synthetic resin frame member 19 is provided so as to run along the external perimeter of the front face of the support plate 18, and the edges on the front face side of the stainless steel support plate 18 do not contact the conveying path rollers (for example the roller illustrated at the top of the first roller pair 80 in Fig. 4A) Therefore, scuffing of the roller surface by the edges on the front-face side of the support plate 18 can be avoided.

Although in the auxiliary transport member 16 of the above exemplary embodiment the frame member 19 is only fixed to one face of the support plate 18 (the front face), the frame member 19 may be fixed to both the front face and the back face of the support plate 18. Such a configuration enables scuffing of the roller surface by the edges on the back-face side of the support plate 18 to be avoided.

### Other Exemplary Embodiments

Explanation has been given above regarding a first exemplary embodiment of the present invention; however, embodiments of the present invention are not limited thereby. Obviously various other modifications are implementable within a range not departing from the spirit of the present invention.

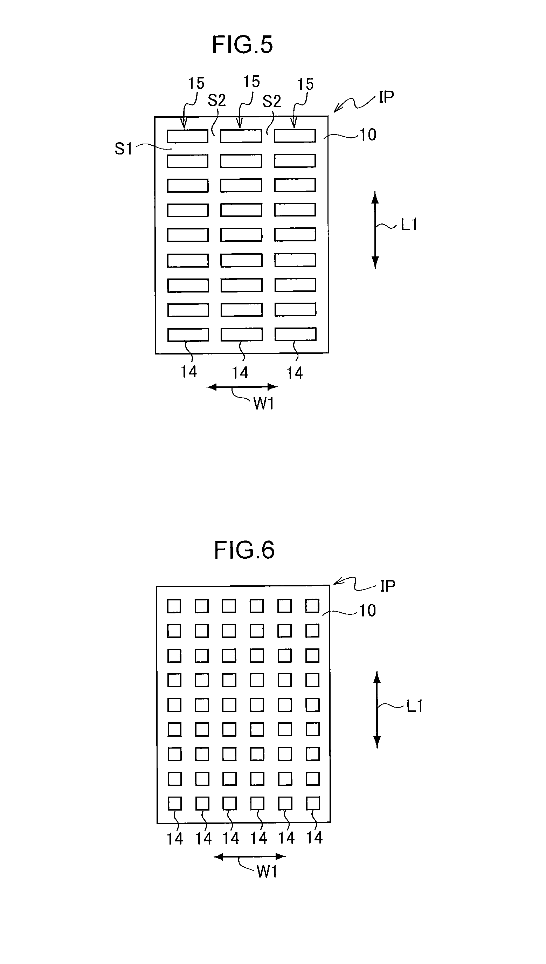

Explanation follows regarding second to thirteenth exemplary embodiments of the stimulable phosphor sheet IP, with reference to Fig. 5 to Fig. 15. Note that similar configuration to that of the first exemplary embodiment is allocated the same reference numerals and further explanation thereof is omitted.

In the stimulable phosphor sheet IP of the first exemplary embodiment, as illustrated in Fig. 2A, the strip shaped magnet sheets 14 that extend in the substrate 10 width direction (the arrow W1 direction) are fixed along the substrate 10 length direction (the arrow L1 direction) at a uniform separation from each other. However, in the second exemplary embodiment illustrated in Fig. 5, plural magnet sheet rows 15 each made up from plural rectangular shaped magnet sheets 14 arrayed along the substrate 10 length direction (the arrow L1 direction) may be arrayed along the substrate 10 width direction (the arrow W1 direction) with spaces S2 therebetween.

In a third exemplary embodiment illustrated in Fig. 6, the stimulable phosphor sheet IP may be configured with square shaped magnet sheets 14 arrayed in a matrix formation with separations therebetween in the substrate 10 length direction and width direction.

In the stimulable phosphor sheet IP of the second exemplary embodiment illustrated in Fig. 5, and the third exemplary embodiment illustrated in Fig. 6, the plural magnet sheets 14 are disposed in the substrate 10 width direction (the arrow W1 direction) with separations therebetween, such that the stimulable phosphor sheet IP readily curves in the width direction. Consequently, the stimulable phosphor sheet IP can also be conveyed with the width direction (the arrow W1 direction) oriented in the conveying direction of the radiographic image data reading apparatus 20.

Moreover, as in the third exemplary embodiment illustrated in Fig. 6, by configuring the magnet sheet 14 in a smaller size and the number of individual magnet sheets 14 to be increased, directionality in the bending rigidity of the stimulable phosphor sheet IP can be reduced or eliminated, obviating the need to match the orientation of the stimulable phosphor sheet IP with the length direction (conveying direction) of the auxiliary transport member 16 when attaching the stimulable phosphor sheet IP to the support plate 18 of the auxiliary transport member 16.

The magnet sheets 14 of the above exemplary embodiments are rectangular shaped. However, embodiments of the present invention are not limited thereto, and shapes other than rectangular shapes may be employed, such as triangular shapes, polygonal shapes with 5 angles or greater, circular shapes and elliptical shapes.

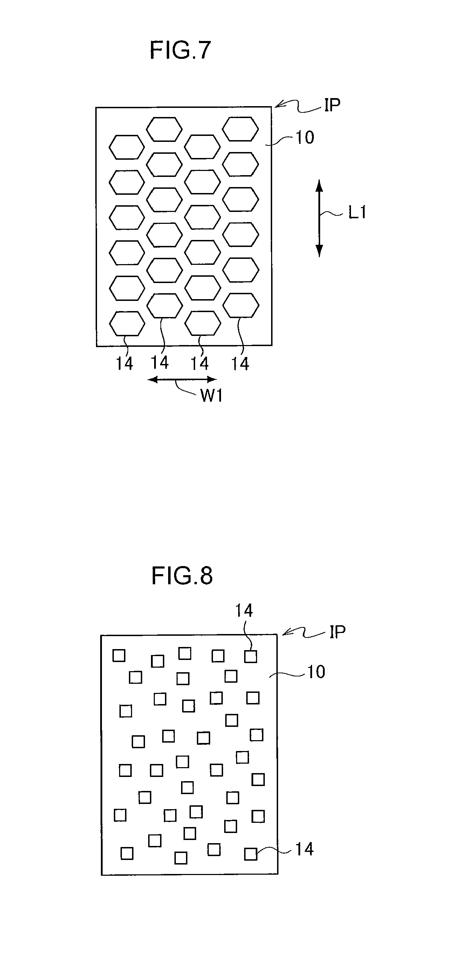

A stimulable phosphor sheet IP of a fourth exemplary embodiment illustrated in Fig. 7 includes plural hexagonal shaped magnet sheets 14 in rows running along the substrate 10 length direction, with the rows arrayed along the substrate 10 width direction (the arrow W1 direction). In this stimulable phosphor sheet IP, the magnet sheet rows that are adjacent to each other in the substrate 10 width direction are disposed phase-shift from each other along the substrate 10 length direction, so that the density of the magnet sheets 14 is made higher. Bending is also readily performed in both the length direction and the width direction in the stimulable phosphor sheet IP of the fourth exemplary embodiment.

In the first to the fourth exemplary embodiments, the plural magnet sheets 14 are disposed regularly in both the substrate 10 length direction and width direction. However, in a fifth exemplary embodiment as illustrated in Fig. 8, plural magnet sheets 14 may be disposed at random on the back face of the substrate 10, with spaces between each other.

In the above first to the fifth exemplary embodiments, explanation has been given of examples in which flexible magnet sheets 14 are individually fixed to the substrate 10 of the stimulable phosphor sheet IP; however, plural small-size, thin metal magnets may be fixed to the substrate 10 instead of the flexible magnet sheets 14. Since the metal magnets have high rigidity and do not bend around the curved conveying path, it is preferable to use the smallest metal magnets as possible, and to dispose them in a matrix formation, such as illustrated in Fig. 6.

It is preferable to use strongly magnetic rare earth magnets as the metal magnets. Since metal magnets are more strongly magnetic than the magnet sheets 14, it is possible to reduce the individual number thereof fixed to the substrate 10 of the stimulable phosphor sheet IP.

The size and layout intervals of metal magnets must obviously be set to a size and layout interval such that the stimulable phosphor sheet IP readily bends. The metal magnets can also be disposed at random with spaces therebetween similarly to the magnet sheet 14.

The conveying direction bending rigidity of the stimulable phosphor sheet IP can be adjusted by the substance and thickness of the substrate 10, the shape and size (width, length and thickness) of the magnet sheets 14, the bending rigidity of the magnet sheets 14, and the arrangement state of the magnet sheets 14 (for example, such factors as the orientation of the magnet sheets 14 and the spacing between one magnet sheet 14 and another magnet sheet 14). Consequently, in order to convey the stimulable phosphor sheet IP reliably retained on the auxiliary transport member 16 at portions where the conveying path in the radiographic image data reading apparatus 20 is curved (the portions indicated by arrows a to d in Fig. 1), adjustment is performed in consideration of the radius of curvature of the conveying path to the bending rigidity of the stimulable phosphor sheet IP, such that the stimulable phosphor sheet IP is prevented from lifting away from or detaching from the support plate 18 of the auxiliary transport member 16. The conveying direction bending rigidity of the stimulable phosphor sheet IP is affected by both the bending rigidity of the substrate 10 and the bending rigidity of the magnet sheets 14. Therefore, these factors are preferably determined by performing tests in which the auxiliary transport member 16 affixed with the stimulable phosphor sheet IP is actually conveyed along the conveying path.

Obviously, magnet sheets 14 with the largest possible magnetic force are used in order to prevent the stimulable phosphor sheet IP from lifting away or detaching from the support plate 18 of the auxiliary transport member 16 at the curved portions of the conveying path.

Although in the present exemplary embodiment the shape of the stimulable phosphor sheet IP is a rectangular shape, various modifications may be made to the shape of the stimulable phosphor sheet IP according to the application.

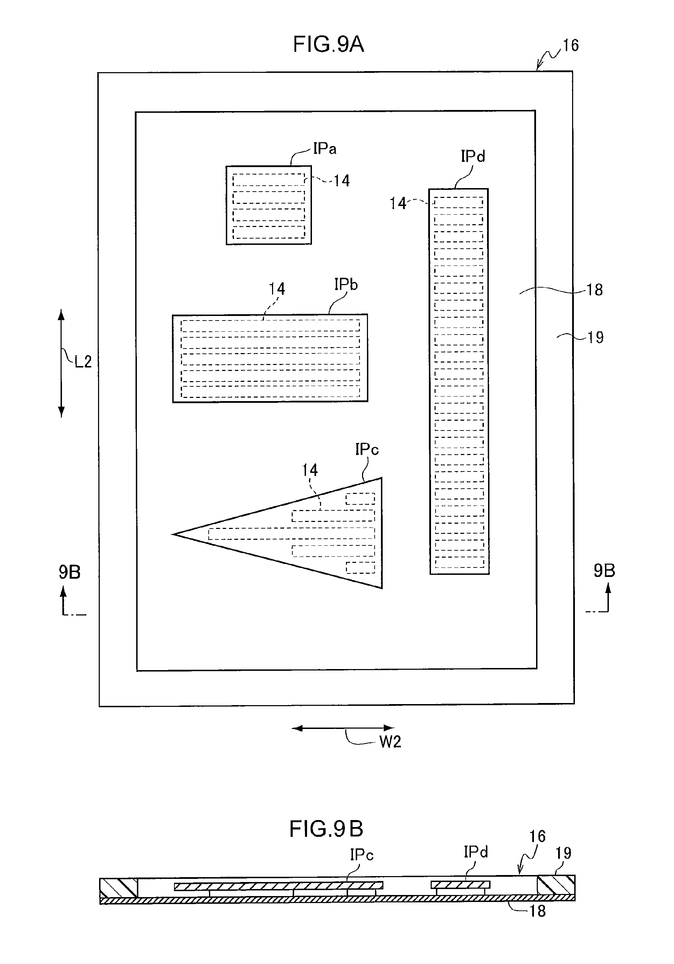

Fig. 9 illustrates stimulable phosphor sheets IPa to IPd according to sixth to ninth exemplary embodiments that are formed in various shapes and have plural magnet sheets 14 fixed to their back faces.

The stimulable phosphor sheet IPa according to the sixth exemplary embodiment is square shaped, the stimulable phosphor sheet IPb according to the seventh exemplary embodiment is rectangular shaped, the stimulable phosphor sheet IPc according to the eighth exemplary embodiment is triangular shaped, and the stimulable phosphor sheet IPd according to the ninth exemplary embodiment is strip shaped.

The shape of the stimulable phosphor sheet IP is not limited to the shapes illustrated in Fig. 9, and, although not shown in the drawings, other shapes such as circular shapes, elliptical shapes, and hexagonal shapes may be used. That is, the shape of the stimulable phosphor sheet IP not limited in the embodiments of the present invention.

Wh atever the shape of the stimulable phosphor sheet IP, the stimulable phosphor sheet IP is retained on the support plate 18 of the auxiliary transport member 16 such that the array direction of the magnet sheets 14 is oriented along the conveying direction (the length direction L2 of the auxiliary transport member 16).

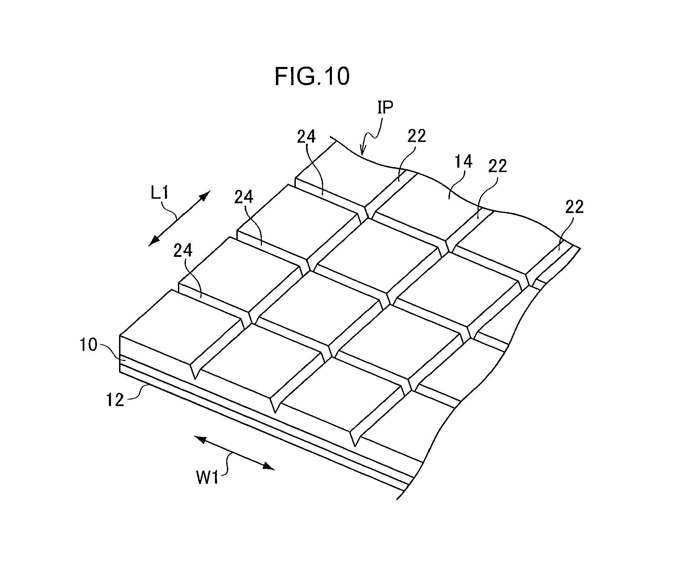

Fig. 10 is a perspective view illustrating a stimulable phosphor sheet IP according to a tenth exemplary embodiment. As illustrated in Fig. 10, a stimulable phosphor sheet IP according to the present exemplary embodiment has a single magnet sheet 14 attached to the whole back face of the substrate 10.

In the front face of the magnet sheet 14, plural first grooves 22 that extend along the stimulable phosphor sheet IP length direction (arrow L1 direction) are formed at uniform intervals along the width direction of the stimulable phosphor sheet IP (arrow W1 direction), and plural second grooves 24 that extend along the stimulable phosphor sheet IP width direction are formed at uniform intervals along the length direction of the stimulable phosphor sheet IP.

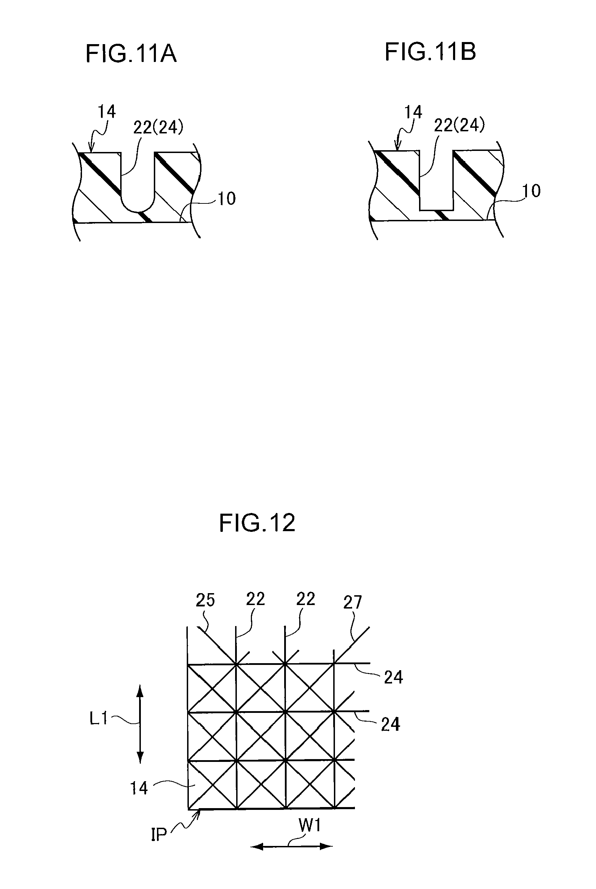

The first grooves 22 and the second grooves 24 of the present exemplary embodiment are formed with V-shaped cross-sections; however, as illustrated in Fig. 11A and Fig. 11B, they may be formed with other shapes, such as U-shapes or rectangular shapes. The first grooves 22 and the second grooves 24 can be formed using a cutter like a chisel on the front face of the flat magnet sheet 14.

Due to forming the first grooves 22 and the second grooves 24 in the front face of the magnet sheet 14 in this manner, the rigidity of the magnet sheet 14 is lowered at the portions formed with the first grooves 22 and the second grooves 24 and, therefore, the stimulable phosphor sheet IP is more readily bent in the length direction and the width direction than in cases in which the first grooves 22 and the second grooves 24 are not formed to the front face of the magnet sheet 14.

The bending rigidity of the stimulable phosphor sheet IP can be adjusted by adjusting such factors as the width and depth of the first grooves 22 and the second grooves 24, and the groove separations.

Note that in the magnet sheet 14 of the stimulable phosphor sheet IP according to the tenth exemplary embodiment as illustrated in Fig. 10, there are plural of the first grooves 22 and the second grooves 24 formed so as to be orthogonal to each other. However, as in the stimulable phosphor sheet IP of an eleventh exemplary embodiment illustrated in plan view in Fig. 12, plural first diagonal grooves 25 and plural second diagonal grooves 27 having V-shaped cross-section and that are inclined with respect to the first grooves 22 and the second grooves 24 may be formed. The stimulable phosphor sheet IP is thereby readily bent not only in the length direction and the width direction, but also in directions inclined with respect to the length direction and the width direction.

Note that the first grooves 22 and the second grooves 24 with a width are provided in the magnet sheet 14 of the stimulable phosphor sheet IP of the tenth exemplary embodiment illustrated in Fig. 10, and that the first grooves 22, the second grooves 24, the first diagonal grooves 25 and the second diagonal grooves 27 with a width are provided in the magnet sheet 14 of the stimulable phosphor sheet IP of the eleventh exemplary embodiment illustrated in Fig. 12. However, instead of these grooves, configuration may be made with notch-shaped grooves with substantially no width formed by such as a cutter knife (thin blade).

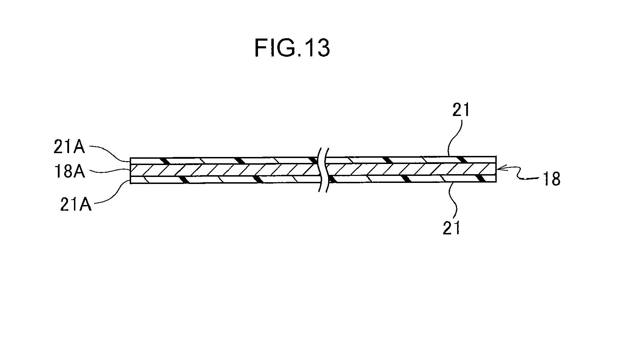

The auxiliary transport member 16 of the first exemplary embodiment illustrated in Fig. 3 is configured such that damage to conveying path rollers is suppressed by attaching the frame member 19 made from synthetic resin to the front face of the support plate 18. However, as in a twelfth exemplary embodiment as illustrated in Fig. 13, thin sheet members 21 made from a material softer than the support plate 18, such as synthetic resin, may be attached to the whole of both sides of the support plate 18, and fixed using for example adhesive to both faces of the support plate 18 such that outer peripheral edge portions 21A of the sheet members 21 configure the same plane as outer peripheral edge portions 18A of the support plate 18. Adopting such a configuration enables suppressing damage to the conveying path rollers by the edges of the support plate 18 similarly to the first exemplary embodiment.

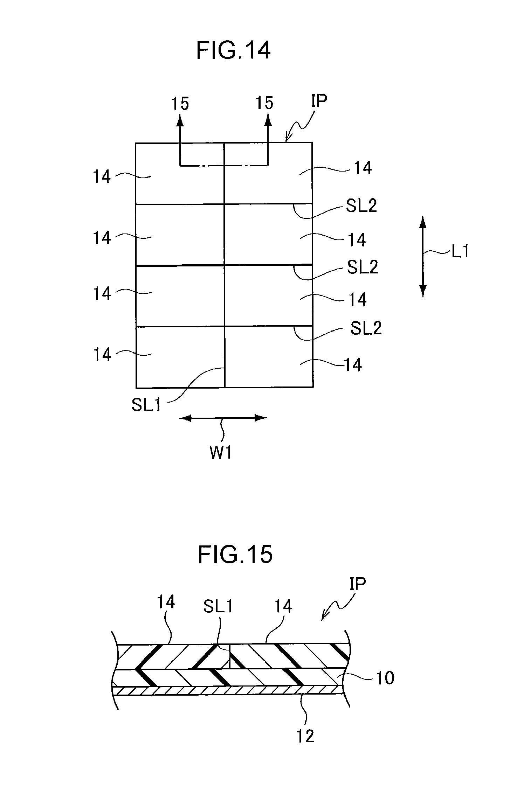

Fig. 14 and Fig. 15 illustrate a stimulable phosphor sheet IP according to a thirteenth exemplary embodiment.

As illustrated in Fig. 14 and Fig. 15, in the stimulable phosphor sheet IP of the present exemplary embodiment, plural sheets (8 sheets in the present exemplary embodiment) of rectangular shaped magnet sheets 14 are attached to the whole of the back-face side of the substrate 10 such that no spaces are present therebetween. The boundary lines SL of the magnet sheets 14 include boundary lines SL1 that extend along the stimulable phosphor sheet IP length direction (arrow L1 direction), and boundary lines SL2 that extend along the width direction (arrow W1 direction).

Since the stimulable phosphor sheet IP of the present exemplary embodiment readily bends at portions between one magnet sheet 14 and another magnet sheet 14 (at portions at the boundary lines SL2), similarly to the exemplary embodiments described above, the stimulable phosphor sheet IP curves so as to follow a curved conveying path and is prevented from lifting away from the auxiliary transport member 16.

In the stimulable phosphor sheet IP of the thirteenth exemplary embodiment, the 8 sheets of the magnet sheets 14 are attached to the whole of the back-face side of the substrate 10; however, the number of the magnet sheets 14 attached to the substrate 10 is not limited to 8 sheets. The number of sheets in the conveying direction may be increased further in consideration of the ease of bending along the curved conveying path.

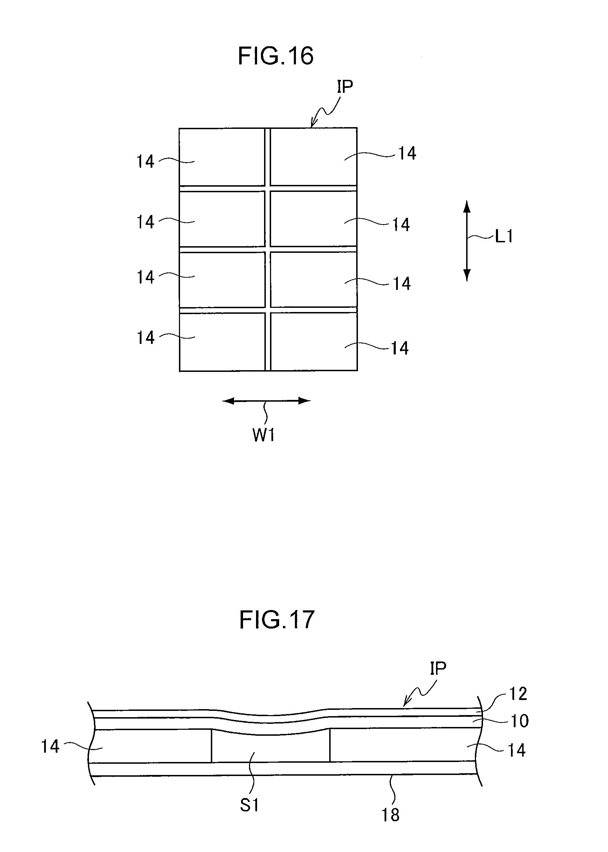

In the stimulable phosphor sheet IP of the thirteenth exemplary embodiment, the edge portions of the adjacent magnet sheets 14 contact each other; however, as in a stimulable phosphor sheet IP of a fourteenth exemplary embodiment as illustrated in Fig. 16, one magnet sheet 14 and another magnet sheet 14 may be slightly separated from each other (by, for example, from under 1mm to the order of a few mm),

However, as illustrated in Fig. 17, for example, if a space S1 between one magnet sheet 14 and another magnet sheet 14 is made too wide and the bending rigidity of the substrate 10 is made too low, there are cases in which a sagging having a concave shape is formed in the substrate 10 and the stimulable phosphor layer 12 at a portion between one magnet sheet 14 and another magnet sheet 14. As a result, the distance from the incident face at the lower end portion of the condensing light guide 84 of the upper reading unit 66 to the stimulable phosphor layer 12 varies along the read conveying path 70, and there is a concern that the radiographic image data (optically stimulated luminescent light) of the stimulable phosphor layer 12 cannot be read at high precision.

Therefore, in cases in which the spaces S1 are provided between one magnet sheet 14 and another magnet sheet 14, it is necessary to consider such factors as the separation between the magnet sheets 14 and the rigidity of the substrate 10 such that stimulable phosphor layer 12 does not sag and form concave shapes at least at portions of the read conveying path 70 where radiographic image data is read.

Note that it is easily possible to prevent a sagging that forms a concave shape in the stimulable phosphor layer 12 by using a stimulable phosphor sheet IP affixed with a single magnet sheet 14 across the whole of the back-face side of the substrate 10 similarly to the tenth exemplary embodiment (see Fig. 10) and the eleventh exemplary embodiment (see Fig. 12), or by using a stimulable phosphor sheet IP with plural magnet sheets 14 provided with no spaces present therebetween similarly to the thirteenth exemplary embodiment (see Fig. 14).

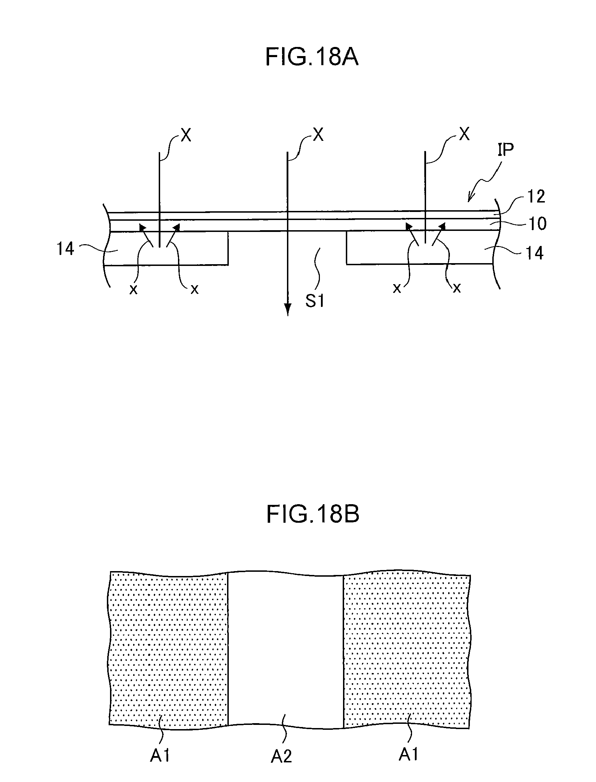

As illustrated in Fig. 18A, in a case in which radiation X is irradiated onto the stimulable phosphor sheet IP from the stimulable phosphor layer 12 side, at the portions where the magnet sheets 14 are disposed, secondary radiation (scatter radiation) x called backscatter is generated from the magnet sheets 14 that has been irradiated with the radiation X.

In a stimulable phosphor sheet IP with the spaces S1 formed between one magnet sheet 14 and another magnet sheet 14, there is obviously no secondary radiation x generated from the magnet sheets 14 at portions where the magnet sheets 14 are not provided.

The stimulable phosphor layer 12 at portions facing the magnet sheets 14 receives both the radiation X and the secondary radiation x, and accordingly receives a radiation amount that is greater than that of the stimulable phosphor layer 12 of the other portions not facing the magnet sheets 14.

Thus, after radiation irradiation, when the excitation light L is then illuminated onto the stimulable phosphor layer 12, the generated light amount of the optically stimulated luminescent light of the stimulable phosphor layer 12 at the portions facing the magnet sheets 14 may become greater than the generated light amount of the optically stimulated luminescent light of the stimulable phosphor layer 12 at the portions not facing the magnet sheet 14.

In the radiographic image data reading apparatus 20 of the present exemplary embodiment, an image captured by imaging the stimulable phosphor layer 12 is displayed with black-and-white reversal onto a monitor (not shown in the drawings) of the touch panel 32.

Consequently, in cases in which there is a large amount of secondary radiation x from the magnet sheet 14, high density regions A1 (at portions facing the magnet sheets 14) and low density portions A2 may occur in the image displayed onto the monitor of the radiographic image data reading apparatus 20, such as, for example, illustrated in Fig. 18B. Namely, the shape of the magnet sheets 14 may be imaged in the resultant image.

In order to prevent the shape of the magnet sheets 14 being imaged in the resultant images, for example, a stimulable phosphor sheet IP affixed with a single magnet sheet 14 over the whole of the back-face side of the substrate 10 may be used, as in the tenth exemplary embodiment (see Fig. 10) or the eleventh exemplary embodiment (see Fig. 12), or a stimulable phosphor sheet IP with plural magnet sheets 14 provided with no spaces between each other may be used, as in the thirteenth exemplary embodiment (see Fig. 14).

Obviously, the spaced S1 may be provided between one magnet sheet 14 and another magnet sheet 14 as long as the shapes of the magnet sheets 14 are not imaged into the resultant image.

As described above, the phosphor sheet of a first aspect of the present invention has the plurality of magnets disposed on the back face of the substrate, thereby enabling, for example, the phosphor sheet to be retained on an auxiliary transport member configured from a magnetic member that is flexible and capable of curving.

However, in cases in which a single individual magnet is disposed over the whole back face of the substrate, due to the bending rigidity of the magnet being added to the bending rigidity of the substrate, the bending rigidity of the phosphor sheet becomes higher and the phosphor sheet becomes difficult to bend.

However, in the phosphor sheet of the first aspect of the present invention, since the plurality of magnets are disposed on the back face of the substrate, the phosphor sheet can readily bend between the magnets. The phosphor sheet can accordingly be retained on the auxiliary transport member and reliably conveyed along a curved conveying path inside a radiographic image data reading apparatus.

The phosphor sheet of the second aspect uses the flexible magnet sheets as the magnets and, therefore, bends even more readily.

The phosphor sheet of the third aspect has the spaces that extend in a direction orthogonal to the first direction and that is provided between the magnets that are adjacent to each other in the first direction and, therefore, the phosphor sheet readily bends in the first direction between one magnet and another magnet.

Note that the spaces preferably extend in a straight line shape in the direction orthogonal to the first direction so as to enable a view from one end side in the direction orthogonal to the first direction to the other end side.

In the phosphor sheet of the fourth aspect, the plurality of magnet rows, each configured from the plurality of magnets arrayed along the first direction, are arrayed in the direction intersecting with the first direction and, therefore the phosphor sheet readily bends between magnets in the direction orthogonal to the first direction. Accordingly, the phosphor sheet readily bends in the direction orthogonal to the first direction.

The phosphor sheet of the fifth aspect has the plurality of magnets disposed without spaces between each other, but the phosphor sheet is readily bendable between the magnets.

In the phosphor sheet of the sixth aspect, since the flexible magnet sheet is disposed on the back face of the flexible substrate, the phosphor sheet can be retained on, for example, a flexible and curvable auxiliary transport member configured from a magnetic member.

Due to forming the flexible magnet sheet with the plurality of first grooves that are disposed traversing across the magnet sheet and formed parallel to each other, the flexible magnet sheet bends along the first grooves even more readily.

Accordingly, when the auxiliary transport member retaining the phosphor sheet is conveyed along the curved conveying path of the radiographic image data reading apparatus, due to the phosphor sheet being retained on the auxiliary transport member such that the direction of the first grooves in the magnet sheet is orthogonal to the conveying direction of the auxiliary transport member, the phosphor sheet is reliably conveyed without lifting away or detached from the auxiliary transport member.

In the phosphor sheet of the seventh aspect, the plurality of second grooves extending along a direction intersecting with the first grooves are formed in the magnet sheet. Accordingly, the phosphor sheet bends even more readily in a direction intersecting with the first grooves.

The auxiliary transport member of the eighth aspect can retain the phosphor sheet of any one of the first aspect to the seventh aspect on a support plate. Since the support plate is flexible, the auxiliary transport member retaining the phosphor sheet can be conveyed on a curved conveying path of the radiographic image data reading apparatus.

The frame member is also provided so as to run along an edge portion of the support plate on at least one face of the support plate and is formed from a material softer than the support plate. Thus, edges on the one face side of the support plate provided with the frame member can be covered by the frame member.

Accordingly, damage to the conveying path by the edges of the support plate during conveying the auxiliary transport member along the conveying path in the radiographic image data reading apparatus can be suppressed

The frame member may be provided on both faces of the support plate. In this way, the edges on both faces of the support plate are covered by the frame members, and damage to the conveying path can be suppressed even further.

In the auxiliary transport member of the ninth aspect, the support plate is a stainless steel plate and, therefore, rust can be prevented from occurring on the support plate, which raises the durability of the auxiliary transport member.

In the auxiliary transport member of the tenth aspect, the frame member is formed thicker than the phosphor sheet. Accordingly, the phosphor sheet does not contact nip rollers when the auxiliary transport member retaining the phosphor sheet on the side where the frame member is provided is conveyed by, for example, being nipped between a pair of nip rollers, since the auxiliary transport member is conveyed with the nip rollers in contact with the frame member.

In the auxiliary transport member of the eleventh aspect, the support plate is sandwiched by sheet members configured from a material softer than the support plate. Accordingly, the sheet member that is configured from the softer material contacts the conveying path during conveying the auxiliary transport member along the conveying path of the radiographic image data reading apparatus, thereby enabling damage to the conveying path due to the edges of the support plate to be suppressed.

As explained above, since the phosphor sheet of the first aspect readily bends, during conveying the phosphor sheet along a curved conveying path by retaining the phosphor sheet on the auxiliary transport member configured from the flexible magnetic member, the phosphor sheet can be conveyed smoothly and reliably along the curved conveying path while preventing the phosphor sheet from lifting away or detaching from the auxiliary transport member.

According to the phosphor sheet of the second aspect, since the flexible magnet sheets are used as the magnets, the phosphor sheet can bend even more readily.

According to the phosphor sheet of the third aspect, since the ease of bending of the phosphor sheet in the first direction can be raised, it is possible to convey the phosphor sheet along a conveying path with a small radius of curvature.

According to the phosphor sheet of the fourth aspect, the phosphor sheet can be bent readily not only in the first direction but also in the direction intersecting with the first direction. Consequently, by retaining the phosphor sheet on the auxiliary transport member oriented in the direction orthogonal to the first direction of the magnet sheet, it is possible to convey the phosphor sheet smoothly and reliably along a curved conveying path while preventing the phosphor sheet from detaching from the auxiliary transport member.

The fifth aspect is the phosphor sheet of the first aspect or the second aspect in which the plurality of magnets are disposed without spaces between each other, which may prevent concave-shaped deformation of the phosphor layer and the substrate between one magnet and another magnet. Accordingly, a constant separation can be maintained between the phosphor layer and the read portion of the radiographic image data reading apparatus during reading of an image in the phosphor layer with the radiographic image data reading apparatus, thereby enabling reading of an image (optically stimulated luminescent light) with good precision.

Moreover, in a case in which radiation is irradiated onto the phosphor sheet from the phosphor layer side, at the portions where the magnets are disposed, secondary radiation (scatter radiation) called backscatter is generated from the magnets being irradiated with the radiation. In a phosphor sheet with spaces formed between one magnet and another magnet, there is obviously no secondary radiation generated from the magnets at portions where the magnets are not provided. The phosphor layer at portions facing the magnets receives both the radiation irradiated from the phosphor layer side and the secondary radiation from the magnets, and accordingly receives a radiation amount that is greater than that of the phosphor layer at other portions not towards the magnets.

Thus, after radiation irradiation, when the excitation light is then illuminated onto the phosphor layer, the generated light amount of the optically stimulated luminescent light of the phosphor layer at the portions facing the magnets may be greater than the generated light amount of the optically stimulated luminescent light of the phosphor layer at the portions not facing the magnets.

As a result, when reading the radiation image (optically stimulated luminescent light) of the phosphor layer in the radiographic image data reading apparatus, a density difference may occur between the portions facing the magnets and the portions not facing the magnets, namely, the shapes of the magnets may be imaged in the resultant images displayed on the image display device (monitor) of the radiographic image data reading apparatus.

However, in the phosphor sheet of the fifth aspect, since the plurality of magnets are disposed without spaces between each other, a density difference in the image such as that referred to above does not occur, namely, the shapes of the magnets are imaged into the resultant image.

Obviously, spaces may be provided between one magnet and another magnet as long as the shapes of the magnets are not imaged into the resultant image.

According to the phosphor sheet of the sixth aspect, since the magnet sheet bends readily along the first grooves, the phosphor sheet can be smoothly and reliably conveyed along the curved conveying path while preventing the phosphor sheet from lifting up or detaching from the auxiliary transport member, due to the phosphor sheet being retained on the auxiliary transport member such that the array direction of the first grooves (first direction) of the magnet sheet match the conveying direction of the auxiliary transport member.

Moreover, according to the phosphor sheet of the sixth aspect, since the magnet sheet is not completely divided, and no spaces are present between one magnet and another magnet, similarly to the phosphor sheet of the fifth aspect, a density difference in the image displayed on the image display device (monitor) of the radiographic image data reading apparatus does not occur, namely, the shapes of magnets are not imaged into the resultant image.

According to the phosphor sheet of the seventh aspect, since the phosphor sheet bends even more readily in a direction intersecting with the first direction, the phosphor sheet can be conveyed reliably without lifting up or detaching from the auxiliary transport member, due to being retained on the auxiliary transport member such that the direction of the first grooves of the magnet sheet is orthogonal to the conveying direction of the auxiliary transport member when the auxiliary transport member retaining the magnet sheet is being conveyed along the curved conveying path of the radiographic image data reading apparatus.

According to the auxiliary transport member of the eighth aspect, the phosphor sheet of any one of the first aspect to the seventh aspect is retained to the flexible support plate, and the auxiliary transport member retaining the phosphor sheet can be conveyed along the curved conveying path of the radiographic image data reading apparatus.

Moreover, damage to the conveying path from the edges of the support plate can be suppressed since the edges of the support plate are covered by the frame member that is formed from a material softer than the support plate.

According to the auxiliary transport member of the ninth aspect, rust can be prevented from occurring on the support plate, and the durability of the auxiliary transport member can be raised.

According to the auxiliary transport member of the tenth aspect, the phosphor sheet can be prevented from contacting the nip rollers of the radiographic image data reading apparatus that convey the auxiliary transport member.

According to the auxiliary transport member of the eleventh aspect, damage to the conveying path of the radiographic image data reading apparatus from the edges of the support plate can be suppressed.

## Claims

1. A phosphor sheet comprising:
a flexible substrate;
a phosphor layer formed on a front face of the substrate; and
a plurality of magnets provided on a back face of the substrate.

2. The phosphor sheet of claim 1, wherein the plurality of magnets are flexible magnet sheets.

3. The phosphor sheet of claim 1 or claim 2, wherein the plurality of magnets are disposed along a first direction, and spaces that extend in a direction orthogonal to the first direction are provided between the magnets that are adjacent to each other in the first direction.

4. The phosphor sheet of claim 3, further comprising a plurality of magnet rows that are arrayed in a direction intersecting with the first direction, each of the plurality of magnet rows comprising a plurality of the magnets arrayed along the first direction.

5. The phosphor sheet of claim 1 or claim 2, wherein the plurality of magnets are disposed without spaces between adjacent magnets.

6. A phosphor sheet comprising:
a flexible substrate;
a phosphor layer formed on a front face of the substrate;
a flexible magnet sheet provided on a back face of the substrate; and
a plurality of first grooves that are disposed traversing across the magnet sheet and are parallel to each other.

7. The phosphor sheet of claim 6, wherein the magnet sheet includes a plurality of second grooves extending along a direction intersecting with the first grooves.

8. An auxiliary transport member comprising:
a flexible support plate that retains the phosphor sheet of any one of claim 1 to claim 7; and
a frame member that is provided so as to run along an edge portion of the support plate on at least one face of the support plate and is formed from a material softer than the support plate.

9. The auxiliary transport member of claim 8, wherein the support plate is a stainless steel plate.

10. The auxiliary transport member of claim 8 or claim 9, wherein the frame member is formed thicker than the phosphor sheet.

11. An auxiliary transport member comprising:
a flexible support plate that retains the phosphor sheet of any one of claim 1 to claim 7; and
sheet members that are configured from a material softer than the support plate and that sandwich the support plate.
